(19) **Europäisches Patentamt / European Patent Office / Office européen des brevets**

(11) **EP 4 759 838 A1**

(12) **EUROPEAN PATENT APPLICATION**

(43) Date of publication:
**17.06.2026 Bulletin 2026/25**

(21) Application number: **24219720.0**

(22) Date of filing: **13.12.2024**

(51) International Patent Classification (IPC):
**C08F 210/06** (2006.01)     **C08F 110/06** (2006.01)
**C08L 23/08** (2025.01)     **D01F 6/00** (2006.01)
**C08F 2/00** (2006.01)

(52) Cooperative Patent Classification (CPC):
(C-Sets available)
**D01F 6/46; C08F 210/06**         (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Abu Dhabi Polymers Co. Ltd (Borouge) - Sole Proprietorship L.L.C.**
  **Abu Dhabi (AE)**
- **Borealis GmbH**
  **1020 Vienna (AT)**

(72) Inventors:
- **KUMAR DAS, Subrata**
  **Abu Dhabi (AE)**
- **VAN CAUWENBERGHE, Hans Jozef Francois**
  **Abu Dhabi (AE)**
- **SINGH, Raghvendra**
  **Abu Dhabi (AE)**
- **ALOBEIDLI, Abdulwahid**
  **Abu Dhabi (AE)**

(74) Representative: **Maiwald GmbH**
**Elisenhof**
**Elisenstraße 3**
**80335 München (DE)**

(54) **POLYPROPYLENE COMPOSITION FOR FIBER, MOLDING OR EXTRUSION COATING APPLICATIONS**

(57)     The present invention relates to a polypropylene composition comprising a first propylene polymer (A) and a second propylene polymer (B), wherein the comonomer content of the second propylene polymer (B) is higher than the comonomer content of the first propylene polymer (A), the total weight content of the first propylene polymer (A) and the second propylene polymer (B) is at least 95.0 wt.-%, based on the total weight of the polypropylene composition, and the polypropylene composition has a total comonomer content of from 0.05 to 0.75 wt.-%, a melt flow rate $MFR_2$ of from 15.0 to 40.0 g/10 min, a xylene cold solubles (XCS) fraction of from 0.5 to 5.0 wt.-%, and a ratio of weight average molecular weight to number average molecular weight $M_w/M_n$ of from 7.0 to 14.0, a process for producing said polypropylene composition,
an article comprising said polypropylene composition, and
the use of said polypropylene composition for the production of fiber articles molded articles and/or for extrusion coating.

EP 4 759 838 A1

Processed by Luminess, 75001 PARIS (FR)

(52) Cooperative Patent Classification (CPC): (Cont.)

C-Sets
**C08F 10/06, C08F 2/001;**
**C08F 10/06, C08F 4/6465;**
**C08F 110/06, C08F 4/6492;**
**C08F 210/06, C08F 210/16, C08F 2500/12,**
**C08F 2500/35;**
C08F 210/06, C08F 210/16, C08F 2500/12,
C08F 2500/35, C08F 2500/27, C08F 2500/34,
C08F 2500/33, C08F 2500/04, C08F 2500/17,
C08F 2500/31, C08F 2500/39, C08F 2500/30

**Description**

The present invention relates to a polypropylene composition comprising a first propylene polymer (A) and a second propylene polymer (B), wherein the comonomer content of the second propylene polymer (B) is higher than the comonomer content of the first propylene polymer (A), the total weight content of the first propylene polymer (A) and the second propylene polymer (B) is at least 95.0 wt.-%, based on the total weight of the polypropylene composition, and the polypropylene composition has a total comonomer content of from 0.05 to 0.75 wt.-%, a melt flow rate $MFR_2$ of from 15.0 to 40.0 g/10 min, a xylene cold solubles (XCS) fraction of from 0.5 to 5.0 wt.-%, and a ratio of weight average molecular weight to number average molecular weight Mw/Mn of from 7.0 to 14.0, a process for producing said polypropylene composition, an article comprising said polypropylene composition, and the use of said polypropylene composition for the production of fiber articles, molded articles and/or for extrusion coating.

**Technical background**

Polypropylene resins are widely used for fiber applications and fabrics such as carpets, BCF (bulk continuous filament) and CF (Continuous filament), staple fibers, POY (partially oriented yarn), FDY (fully drawn yarn), nonwovens. Such fiber applications have specific requirements on the polypropylene resins, such as a good processability to run with very high line speed and a sufficient strength / elongation balance to have softness and integrity to the final article produced with different fibers. Similar polypropylene resin is also used in an injection molded article, like a thin wall packaging element, or house hold items. Further, polypropylene reactor grade resins (without peroxide visbreaking) can be used in extrusion coating applications where woven or nonwoven fabric is coated with polypropylene resins

Polypropylene fiber or polypropylene fabric has been used in a variety of applications, including carpets, stitching threads, textiles, hygiene products, disposable diapers, sanitary products, clothing materials, bandages, and packing materials. When polypropylene fiber is used in many applications, the fiber or the fabric is brought into direct contact with the body, hence favourable soft feeling, which can provide an excellent feel to the touch, is important. Additionally demand has arisen for a carpet fiber or fabric exhibiting appropriate stretchability and elastic recovery.

Fiber applications for polypropylene compositions are e.g. disclosed in WO 2010/105980 A1, WO 2013/124219 A1 and EP 2 682 505 A1.

From the viewpoint of improvement of such a performance, reduction of the denier of fiber is important, however, fine denier of polypropylene fiber may be reflected with reduction in fiber strength (dtex/filament or gpd) and may raise a difficulty while processing at high line speed machines (higher percentage of fiber breakages and wastage). To improve the spinnability of raw material polypropylene, typically narrow molecular weight distribution polypropylene grade, whose molecular weight has been adjusted through decomposition of high-molecular-weight polypropylene by means of an organic peroxide or thermal degradation are most common in the industry. However, this method poses problems in terms of discoloration through use of a peroxide, and smoking during spinning.

Therefore, in response to increasing demand for improved polypropylene grade, further technical developments are required for improving the softness of fiber and control of the orientation of fiber forming, strechability which can provide high fiber strength and good elongation. Also, fiber colour retention is very important for long life of carpets and/or visual outlook. The materials should also have good organoleptic properties (lower odour and anti gas fading resistance), and in some applications good light stability or colour fastness for fibers are also desired.

In the present invention it has surprisingly been found that by providing a polypropylene composition comprising two propylene polymers, which differ in their comonomer content, and showing a low comonomer content and a rather broad molecular weight distribution by omitting a vis-breaking step, a polypropylene fiber can be obtained, which shows an improved balance of properties in regard of improved fiber spinning showing improved processability and improved fiber tenacity or strength and elongation showing improved mechanical properties. Additionally, the fibers show a good soft feeling, crimp properties and improved colour retention (lower yellowing) and melt flow rate retention upon multipass extrusion.

**Summary of the invention**

In a first aspect the present invention relates to a polypropylene composition comprising

(A) a first propylene polymer being a propylene homopolymer or copolymer of propylene with comonomers selected from ethylene and alpha-olefins having from 4 to 8 carbon atoms, which has a total comonomer content of from 0 to 0.20 wt.-%, preferably 0 to 0.15 wt.-%, more preferably from 0 to 0.10 wt.-%, based on the total weight of the first propylene polymer (A), determined by quantitative FTIR spectroscopy, calibrated by quantitative $^{13}$C-NMR spectroscopy;

(B) a second propylene polymer being a copolymer of propylene with comonomers selected from ethylene and alpha-olefins having from 4 to 8 carbon atoms, which has a total comonomer content of from 0.15 to 1.25 wt.-%, preferably from 0.20 to 1.00 wt.-%, more preferably from 0.22 to 0.80 wt.-%, based on the total weight of the second propylene polymer (B), calculated or determined by quantitative FTIR spectroscopy, calibrated by quantitative $^{13}$C-NMR spectroscopy;

wherein

the comonomer content of the second propylene polymer (B) is higher than the comonomer content of the first propylene polymer (A);
the total weight content of the first propylene polymer (A) and the second propylene polymer (B) is at least 95.0 wt.-%, such as from 95.0 to 100 wt.-%, preferably from 96.0 to 99.999 wt.-%, more preferably from 97.5 to 99.99 wt.-%, based on the total weight of the polypropylene composition, and
the polypropylene composition has

- a total comonomer content of from 0.05 to 0.75 wt.-%, preferably from 0.07 to 0.60 wt.-% more preferably from 0.10 to 0.50 wt.-%, based on the total weight of the polypropylene composition, determined by quantitative FTIR spectroscopy, calibrated by quantitative $^{13}$C-NMR spectroscopy;
- a melt flow rate $MFR_2$ of from 15.0 to 40.0 g/10 min, preferably from 17.5 to 37.5 g/10 min, more preferably from 20.0 to 35.0 g/10 min, determined according to ISO 1133 at 230°C and 2.16 kg; and
- a ratio of weight average molecular weight to number average molecular weight Mw/Mn of from 7.0 to 14.0, preferably from 7.5 to 13.0, more preferably from 8.0 to 12.5, determined by GPC analysis according to ISO 16014-4:2003 and ASTM D 6474-99.

In a second aspect the present invention relates to a process for producing the polypropylene composition as described above or below comprising the following steps:

- Polymerizing propylene and optionally comonomers selected from ethylene and alpha-olefins having from 4 to 8 carbon atoms in the presence of a Ziegler-Natta catalyst system in a first polymerization stage to obtain a first polymerization mixture comprising the first propylene polymer (A) and the Ziegler-Natta catalyst system;
- Transferring the first polymerization mixture from the first polymerization stage to a second polymerization stage;
- Polymerizing propylene and comonomers selected from ethylene and alpha-olefins having from 4 to 8 carbon atoms in the presence of first polymerization mixture in the second polymerization stage to obtain a second polymerization mixture comprising the first propylene polymer (A), the second propylene polymer (B) and the Ziegler-Natta catalyst system;
- Withdrawing the second polymerization mixture from the second polymerization stage;
- Compounding the mixture comprising the first propylene polymer (A) and the second propylene polymer (B) without presence of an organic peroxide for vis-breaking to obtain the polypropylene composition.

In a third aspect the present invention relates to an article comprising the polypropylene composition as described above or below.
In a fourth aspect the present invention relates to the use of the polypropylene composition as described above or below for the production of fiber articles or fabrics, preferably carpet fibers, spunbond nonwovens, such as masks, carpets, artificial grass, stitching threads, for the production of injection molded articles, like thin wall packaging elements or house hold items, such as cups, boxes, trays, pails, buckets, bowls, lids, flaps, caps, and/or for the production of extrusion coating material, such as extrusion coated woven or non-woven fabrics.

**Definitions**

A propylene homopolymer is a polymer, which essentially consists of propylene monomer units. Due to impurities especially during commercial polymerization processes a propylene homopolymer can comprise up to 0.05 mol-% comonomer units, preferably up to 0.02 mol-%, more preferably up to 0.01 mol-% comonomer units.
A propylene random copolymer is a copolymer of propylene monomer units and comonomer units in which the comonomer units are distributed randomly over the polypropylene chain. Thereby, a propylene random copolymer does not contain an elastomeric polymer phase dispersed therein.
Usually, a propylene polymer comprises at least two propylene polymer fractions (components), which have been produced under different polymerization conditions resulting in different (weight average) molecular weights and/or different comonomer contents for the fractions, preferably produced by polymerizing in multiple polymerization stages with different polymerization conditions, is referred to as "multimodal". The prefix "multi" relates to the number of different polymer fractions the propylene polymer is consisting of. As an example of multimodal propylene polymer, a propylene polymer consisting of two fractions only is called "bimodal", whereas a propylene polymer consisting of three fractions only is called "trimodal".

A unimodal propylene polymer only consists of one fraction.

Thereby, the term "different" means that the propylene polymer fractions differ from each other in at least one property, preferably in the weight average molecular weight - which can also be measured in different melt flow rates of the fractions - or comonomer content or both. Hence the term "multimodal" means that a polymer contains two or more fractions that differ either in molecular weight (Mw) or comonomer content (wt.-% or mol-%) or comonomer type (ethylene, 1-butene, 1-hexene etc).

**Detailed description**

Polypropylene composition

The polypropylene composition comprises

(A) a first propylene polymer being a propylene homopolymer or copolymer of propylene with comonomers selected from ethylene and alpha-olefins having from 4 to 8 carbon atoms, which has a total comonomer content of from 0 to 0.20 wt.-%, preferably 0 to 0.15 wt.-%, more preferably from 0 to 0.10 wt.-%, based on the total weight of the first propylene polymer (A), determined by quantitative FTIR spectroscopy, calibrated by quantitative $^{13}$C-NMR spectroscopy; and

(B) a second propylene polymer being a copolymer of propylene with comonomers selected from ethylene and alpha-olefins having from 4 to 8 carbon atoms, which has a total comonomer content of from 0.15 to 1.25 wt.-%, preferably from 0.20 to 1.00 wt.-%, more preferably from 0.22 to 0.80 wt.-%, based on the total weight of the second propylene polymer (B), calculated or determined by quantitative FTIR spectroscopy, calibrated by quantitative $^{13}$C-NMR spectroscopy;

wherein

the comonomer content of the second propylene polymer (B) is higher than the comonomer content of the first propylene polymer (A).

The total comonomer content of the second propylene polymer (B) is preferably at most 1.20 wt.-%, more preferably 0.05 to 1.00 wt.-%, still more preferably 0.10 to 0.90 wt.-% higher than the total comonomer content of the first propylene polymer (A).

It is further preferred that the total comonomer content of the first propylene polymer (A) is at least 0.10 wt.-% lower than the total comonomer content of the second propylene polymer (B).

The polypropylene composition preferably multimodal, more preferably bimodal especially in regard of the comonomer content.

It is preferred that the polypropylene composition comprises a multimodal, preferably a bimodal propylene copolymer, which comprises, more preferably consists of the first propylene polymer (A) and the second propylene polymer (B) as polymer fractions.

The first propylene polymer (A) and the second propylene polymer (B) are thereby preferably produced in a multistage polymerization process, such as the process described above or below.

The total weight content of the first propylene polymer (A) and the second propylene polymer (B) in the polypropylene composition is at least 95.0 wt.-%, such as from 95.0 to 100 wt.-%, preferably from 96.0 to 99.999 wt.-%, more preferably from 97.5 to 99.99 wt.-%, based on the total weight of the polypropylene composition.

The polypropylene composition can further comprise polymeric components, which are different from the first propylene polymer (A) and the second propylene polymer (B), in an amount of preferably 0.0 to 5.0 wt.-% based on the total weight of the polypropylene composition.

In a preferred embodiment the polymeric components of the polypropylene composition consist of the first propylene polymer (A) and the second propylene polymer (B).

Besides these polymeric components the polypropylene composition can comprise one or more additives in an amount of from 0.0 up to 5.0 wt.-%, such as from 0.1 to 4.7 wt.-%, preferably from 0.2 to 4.5 wt.-%, based on the total weight of the polypropylene composition. The one or more additives are preferably selected from acid scavengers, antioxidants, UV stabilizers, processing aids, alpha nucleating agents, beta nucleating agents, etc. Such additives are commercially available and for example described in "Plastic Additives Handbook", 6th edition 2009 of Hans Zweifel (pages 1141 to 1190).

Usually, these additives are added in quantities of 1.0 to 50000 ppm for each single component.

The one or more additives can be added to the polymeric components in a blending step.

Thereby, the one or more additives can be added to the polymeric components in form of master batches in which one or more additives are blended with a carrier polymer in concentrated amounts. Any optional carrier polymer is calculated to the amount of additives, based on the total weight of the propylene copolymer composition.

The polypropylene composition has a total comonomer content of from 0.05 to 0.75 wt.-%, preferably from 0.07 to 0.60 wt.-% more preferably from 0.10 to 0.50 wt.-%, based on the total weight of the polypropylene composition, determined by quantitative FTIR spectroscopy, calibrated by quantitative $^{13}$C-NMR spectroscopy.

The comonomers are preferably selected from ethylene and alpha-olefins having from 4 to 8 carbon atoms, more preferably from ethylene, 1-butene and 1-hexene, still more preferably from ethylene and 1-butene.

Especially preferred is that the comonomers are ethylene.

The polypropylene composition has a melt flow rate $MFR_2$ of from 15.0 to 40.0 g/10 min, preferably from 17.5 to 37.5 g/10 min, more preferably from 20.0 to 35.0 g/10 min, determined according to ISO 1133 at 230°C and 2.16 kg.

Further, the polypropylene composition has a ratio of weight average molecular weight to number average molecular weight Mw/Mn of from 7.0 to 14.0, more preferably from 7.5 to 13.0, still more preferably from 8.0 to 12.5, determined by GPC analysis according to ISO 16014-4:2003 and ASTM D 6474-99.

A broad Mw/Mn ratio of at least 7.0 is an indication that the polypropylene composition has not been subjected to a vis-breaking step in the presence of an organic peroxide.

The polypropylene composition is preferably further characterized by the following properties:

It is preferred that the polypropylene composition has a weight average molecular weight Mw of from 175000 to 400000 g/mol, preferably from 185000 to 375000 g/mol, more preferably from 200000 to 350000 g/mol, determined by GPC analysis according to ISO 16014-4:2003 and ASTM D 6474-99.

Further, the polypropylene composition preferably has a number average molecular weight Mn of from 19000 to 30000 g/mol, more preferably from 20000 to 28000 g/mol, still more preferably from 21000 to 26000 g/mol, determined by GPC analysis according to ISO 16014-4:2003 and ASTM D 6474-99.

Still further, the polypropylene composition preferably has a z average molecular weight Mz of from 550000 to 850000 g/mol, more preferably from 575000 to 825000 g/mol, still more preferably from 600000 to 800000 g/mol, determined by GPC analysis according to ISO 16014-4:2003 and ASTM D 6474-99.

Furthermore, the polypropylene composition preferably has a ratio of Mz/Mw of from 2.0 to 5.0, more preferably from 2.2 to 4.5, still more preferably from 2.5 to 4.0, determined by GPC analysis according to ISO 16014-4:2003 and ASTM D 6474-99.

The polypropylene composition preferably has a melting temperature Tm of from 152.5 to 165.0°C, more preferably from 153.5 to 163.5°C, still more from 155.0 to 162.5°C, determined by DSC analysis according to ISO 11357 / part 3 / method C2 in a heat / cool / heat cycle with a scan rate of 10 °C/min in the temperature range of 0 to +225°C.

Further, the polypropylene composition preferably has a crystallization temperature Tc of from 110.0 to 123.0°C, more preferably from 111.5 to 121.5°C, still more preferably from 113.0 to 120°C, determined by DSC analysis according to ISO 11357 / part 3 / method C2 in a heat / cool / heat cycle with a scan rate of 10 °C/min in the temperature range of 0 to +225°C.

Still further, the polypropylene composition preferably has a melting enthalpy $\Delta Hm$ of from 105.0 to 125.0 J/g, more preferably from 107.0 to 122.5 J/g, still more preferably from 109.0 to 120.0 J/g, determined by DSC analysis according to ISO 11357 / part 3 / method C2 in a heat / cool / heat cycle with a scan rate of 10 °C/min in the temperature range of 0 to +225°C.

Additionally, the polypropylene composition preferably has a crystallization enthalpy $\Delta Hc$ of from 100.0 to 120.0 J/g, more preferably from 103.5 to 117.5 J/g, still more preferably from 104.0 to 115.0 J/g, determined by DSC analysis according to ISO 11357 / part 3 / method C2 in a heat / cool / heat cycle with a scan rate of 10 °C/min in the temperature range of 0 to +225°C.

Furthermore, the polypropylene composition preferably has a xylene cold solubles (XCS) fraction of from 0.5 to 5.0 wt.-%, more preferably 1.0 to 4.5 wt.-%, still more preferably from 1.5 to 4.0 wt.-%, determined according to ISO 16152.

A low amount of XCS fraction indicates that the polypropylene composition is preferably monophasic, in the sense that no elastomeric phase is present in the polypropylene composition.

Further, the polypropylene composition preferably has a complex viscosity at a frequency of 0.05 rad/s $eta_{0.05}$ of from 750 to 1500 Pa·s, preferably from 900 to 1350 Pa·s, more preferably from 1000 to 1250 Pa·s, determined by dynamic shear measurements complying with ISO 6721-1 and ISO 6721-10.

Still further, the polypropylene composition preferably has a complex viscosity at a frequency of 300 rad/s $eta_{0.05}$ of from 50 to 250 Pa·s, preferably from 75 to 225 Pa·s, more preferably from 100 to 200 Pa·s, determined by dynamic shear measurements complying with ISO 6721-1 and ISO 6721-10.

Furthermore, the polypropylene composition preferably has a shear thinning index $SHI_{2.7/210}$ of from 20.0 to 35.0, preferably from 22.0 to 32.5, more preferably from 23.0 to 30.0, determined by dynamic shear measurements complying with ISO 6721-1 and ISO 6721-10.

These properties from dynamic shear measurements are rheological parameters indicating the molecular weight and the rather broad molecular weight distribution of the polypropylene composition.

The polypropylene composition shows an improved balance of properties in regard of mechanical properties and impact properties:

The polypropylene composition preferably has a tensile modulus of from 1350 to 1750 MPa, more preferably from 1375 to 1700 MPa, still more preferably from 1400 to 1650 MPa, determined according to ISO 527-2/1 A.

Further, the polypropylene composition preferably has a tensile stress at yield of from 30.0 to 40.0 MPa, more preferably from 31.0 to 38.5 MPa, still more preferably from 32.0 to 37.5 MPa, determined according to ISO 527-2/1 A.

Still further, the polypropylene composition preferably has a tensile strain at yield of from 5.0 to 15.0 %, more preferably from 6.0 to 13.5 %, still more preferably from 7.0 to 12.5 %, determined according to ISO 527-2/1 A.

Additionally, the polypropylene composition preferably has a flexural modulus of from 1350 to 1750 MPa, more preferably from 1375 to 1700 MPa, still more preferably from 1400 to 1650 MPa, determined according to ISO 178.

Furthermore, the polypropylene composition preferably has a Charpy notched impact strength at 23°C of from 1.0 to 7.5 kJ/m$^2$, more preferably from 1.2 to 6.5 kJ/m$^2$, still more preferably from 1.5 to 5.0 kJ/m$^2$, determined according to to ISO 179-1 eA at +23 °C.

The polypropylene composition preferably comprises the first propylene polymer (A) in an amount of from 35 to 60 wt.-%, more preferably from 37 to 55 wt.-%, still more preferably from 40 to 50 wt.-%, based on the total weight of the polypropylene composition.

Further, the polypropylene composition preferably comprises the second propylene polymer (B) in an amount of from 40 to 65 wt.-%, more preferably from 45 to 63 wt.-%, still more preferably from 50 to 60 wt.-%, based on the total weight of the polypropylene composition.

It is preferred that the weight ratio of the first propylene polymer (A) to the second propylene polymer (B) in the polypropylene composition is from 35 : 65 to 60 : 40, more preferably from 37 : 63 to 55 : 45, still more preferably from 40 : 60 to 50 : 50.

The first propylene polymer (A) is a propylene homopolymer or random copolymer of propylene with comonomers selected from ethylene and alpha-olefins having from 4 to 8 carbon atoms.

The comonomers, if present, are selected from ethylene and alpha-olefins having from 4 to 8 carbon atoms preferably from ethylene, 1-butene and 1-hexene, still more preferably from ethylene and 1-butene.

Especially preferred is that the comonomers are ethylene.

The total comonomer content of the first propylene polymer (A) is from 0 to 0.20 wt.-%, preferably 0 to 0.15 wt.-%, more preferably from 0 to 0.10 wt.-%, based on the total weight of the first propylene polymer (A), determined by quantitative FTIR spectroscopy, calibrated by quantitative $^{13}$C-NMR spectroscopy.

In one embodiment the first propylene polymer (A) is a propylene homopolymer.

In a second embodiment the first propylene polymer (A) is a random copolymer of propylene with comonomers selected from ethylene and alpha-olefins having from 4 to 8 carbon atoms.

In the latter embodiment the comonomer content of the first propylene polymer (A) is higher than 0 wt.-%, preferably at least 0.01 wt.-%, more preferably at least 0.05 wt.-%, based on the total weight of the first propylene polymer (A), determined by quantitative FTIR spectroscopy, calibrated by quantitative $^{13}$C-NMR spectroscopy.

The first propylene polymer (A) preferably has a melt flow rate MFR$_2$ of from 15.0 to 40.0 g/10 min, more preferably from 17.5 to 37.5 g/10 min, still more preferably from 20.0 to 35.0 g/10 min, determined according to ISO 1133 at 230°C and 2.16 kg.

The melt flow rate MFR$_2$ of the first propylene polymer (A) is preferably comparable to the melt flow rate MFR$_2$ of the polypropylene composition.

Further, the first propylene polymer (A) preferably has a xylene cold solubles (XCS) fraction of from 1.5 to 7.5 wt.-%, more preferably 2.5 to 6.5 wt.-%, still more preferably from 3.0 to 5.5 wt.-%, determined according to ISO 16152.

A low amount of XCS fraction indicates that the first propylene polymer (A) is preferably monophasic, in the sense that no elastomeric phase is present in the first propylene polymer (A).

The second propylene polymer (B) is a random copolymer of propylene with comonomers selected from ethylene and alpha-olefins having from 4 to 8 carbon atoms. The comonomers are selected from ethylene and alpha-olefins having from 4 to 8 carbon atoms preferably from ethylene, 1-butene and 1-hexene, still more preferably from ethylene and 1-butene.

Especially preferred is that the comonomers are ethylene.

The total comonomer content of the second propylene polymer (B) is from 0.15 to 1.25 wt.-%, preferably from 0.20 to 1.00 wt.-%, more preferably from 0.22 to 0.80 wt.-%, based on the total weight of the second propylene polymer (B), calculated or determined by quantitative FTIR spectroscopy, calibrated by quantitative $^{13}$C-NMR spectroscopy. The total comonomer content of the second propylene polymer (B) is preferably at most 1.20 wt.-%, more preferably 0.05 to 1.00 wt.-%, still more preferably 0.10 to 0.90 wt.-% higher than the total comonomer content of the first propylene polymer (A).

It is further preferred that the total comonomer content of the first propylene polymer (A) is at least 0.10 wt.-% lower than the total comonomer content of the second propylene polymer (B).

It is preferred that the comonomers in the first propylene polymer (A), if present, are the same as the comonomers in the second propylene polymer (B).

The second propylene polymer (B) preferably has a melt flow rate $MFR_2$ of from 15.0 to 40.0 g/10 min, more preferably from 17.5 to 37.5 g/10 min, still more preferably from 20.0 to 35.0 g/10 min, determined according to ISO 1133 at 230°C and 2.16 kg.

The melt flow rate $MFR_2$ of the second propylene polymer (B) is preferably comparable to the melt flow rate $MFR_2$ of the first propylene polymer (A) and the polypropylene composition. Thus, the polypropylene composition is preferably unimodal in regard of the molecular weight as indicated by the melt flow rate.

Consequently, the first propylene polymer (A) and the second propylene polymer (B) preferably have GPC properties, such as Mw, Mn, Mz, in the same range as indicated above for the polypropylene composition.

Further, the second propylene polymer (B) preferably has a xylene cold solubles (XCS) fraction of from 0.5 to 4.0 wt.-%, more preferably 1.0 to 3.5 wt.-%, still more preferably from 1.7 to 3.0 wt.-%, calculated or determined according to ISO 16152.

A low amount of XCS fraction indicates that the second propylene polymer (B) is preferably monophasic, in the sense that no elastomeric phase is present in the second propylene polymer (B).

It is preferred that the second propylene polymer (B) has a lower amount of XCS fraction compared to the first propylene polymer (A).

The amount of XCS fraction of the first propylene polymer (A) is preferably at least 0.30 wt.-%, more preferably 0.40 to 3.50 wt.-%, still more preferably 0.50 to 3.40 wt.-% higher than the XCS fraction of the second propylene polymer (B).

When prepared in the second polymerization stage of a multistage polymerization process the properties of the second propylene polymer (B) are usually not directly measurable. These properties can then be calculated from the directly measured properties of the first propylene polymer (A) and the polypropylene composition using the formulas as described below in the measurement section of the example section.

Process

The polypropylene composition as defined above or below is produced in a process, which comprises the following steps:

- Polymerizing propylene and optionally comonomers selected from ethylene and alpha-olefins having from 4 to 8 carbon atoms in the presence of a Ziegler-Natta catalyst system in a first polymerization stage to obtain a first polymerization mixture comprising the first propylene polymer (A) and the Ziegler-Natta catalyst system;
- Transferring the first polymerization mixture from the first polymerization stage to a second polymerization stage;
- Polymerizing propylene and comonomers selected from ethylene and alpha-olefins having from 4 to 8 carbon atoms in the presence of first polymerization mixture in the second polymerization stage to obtain a second polymerization mixture comprising the first propylene polymer (A), the second propylene polymer (B) and the Ziegler-Natta catalyst system ;
- Withdrawing the second polymerization mixture from the second polymerization stage;
- Compounding the mixture comprising the first propylene polymer (A) and the second propylene polymer (B) without presence of an organic peroxide for vis-breaking to obtain the polypropylene composition.

Preferably the first polymerisation stage is conducted in a first polymerization reactor, and the second polymerisation stage is conducted in a second polymerization reactor.

Preferably, the polymerization reactors are selected from slurry phase reactors, such as loop reactors and/or gas phase reactors such as fluidized bed reactors, more preferably from loop reactors and fluidized bed reactors.

A preferred sequential multistage polymerization process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of LyondellBasell.

It is preferred that the operating temperature in the first polymerization reactor is in the range from 62 to 85°C, more preferably in the range from 65 to 82°C, still more preferably in the range from 67 to 80°C.

Alternatively or additionally to the previous paragraph it is preferred that the operating temperature in the second polymerization reactor is in the range from 75 to 95°C, more preferably in the range from 78 to 92°C.

Typically, the pressure in the first polymerization reactor, preferably in the loop reactor (LR), is in the range from 20 to 80 bar, preferably 30 to 70 bar, like 35 to 65 bar, whereas the pressure in the second polymerization reactor, i.e. in the gas phase reactor (GPR), is in the range from 5 to 50 bar, preferably 15 to 40 bar.

Preferably hydrogen is added in each polymerization reactor in order to control the molecular weight, i.e. the melt

flow rate $MFR_2$.

It is preferred that the hydrogen is added to the first polymerization reactor in step a) with a molar ratio of hydrogen to propylene monomer units $H_2/C_3$ of from 1.5 to 12.5 mol/kmol, more preferably from 2.0 to 10.5 mol/kmol, still more preferably from 2.5 to 7.5 mol/kmol.

It is further preferred that wherein hydrogen is added to the second polymerization reactor in step c) with a molar ratio of hydrogen to propylene monomer units $H_2/C_3$ of from 10.0 to 50.0 mol/kmol, more preferably from 15.0 to 45.0 mol/kmol, still more preferably from 20.0 to 40.0 mol/kmol.

Optionally comonomer units are added to the first polymerization reactor in step a) in with a molar ratio of comonomer to propylene monomer units comonomer/$C_3$, preferably of ethylene to propylene monomer units $C_2/C_3$ of from 0 to 0.50 mol/kmol, more preferably from 0 to 0.30 mol/kmol, still more preferably from 0 to 0.20 mol/kmol.

It is further preferred that the comonomer to propylene monomer units comonomer/$C_3$, preferably of ethylene to propylene monomer units $C_2/C_3$ in the second polymerization reactor in step c) is from 0.2 to 5.0 mol/kmol, more preferably from 0.3 to 4.5 mol/kmol, still more preferably from 0.5 to 4.0 mol/kmol.

The first propylene polymer (A) is polymerized in the first polymerization stage, preferably the first polymerization reactor and the second propylene polymer (B) is polymerized in the second polymerization stage, preferably the second polymerization reactor.

The preparation of the polypropylene composition can comprise in addition to the (main) polymerization of the first propylene polymer (A) and the second propylene polymer (B) in the at least two polymerization reactors prior thereto a pre-polymerization in a pre-polymerization reactor upstream to the first polymerization reactor.

In the pre-polymerization reactor a polypropylene is produced. The pre-polymerization, if present, is conducted in the presence of the Ziegler-Natta catalyst system. According to this embodiment, the Ziegler-Natta catalyst system is introduced to the pre-polymerization step. However, this shall not exclude the option that at a later stage for instance further co-catalyst is added in the polymerization process, for instance in the first reactor. In one embodiment, all components of the Ziegler-Natta catalyst system are only added in the pre-polymerization reactor, if a pre-polymerization is applied.

The pre-polymerization reaction is typically conducted at a temperature of 0 to 60°C, preferably from 15 to 50°C, and more preferably from 20 to 45°C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein. Furthermore, according to the present invention, an ethylene feed is employed during pre-polymerization as mentioned above.

It is possible to add other components also to the pre-polymerization stage. Thus, hydrogen may be added into the pre-polymerization stage to control the molecular weight of the polypropylene as is known in the art. Further, antistatic additive may be used to prevent the particles from adhering to each other or to the walls of the reactor.

The precise control of the pre-polymerization conditions and reaction parameters is within the skill of the art.

In case that pre-polymerization is not used, propylene and the other ingredients such as the Ziegler-Natta catalyst system are directly introduced into the first polymerization reactor.

The Ziegler-Natta catalyst system will be now described in more detail.

The catalyst used in the present invention is a solid Ziegler-Natta catalyst, which comprises compounds of a transition metal of Group 4 to 6 of IUPAC, like titanium, a Group 2 metal compound, like a magnesium, and an internal donor being preferably a non-phthalic compound, more preferably a non-phthalic acid ester, still more preferably being a diester of non-phthalic dicarboxylic acids as described in more detail below. Thus, the catalyst is fully free of undesired phthalic compounds. Further, the solid catalyst is preferably free of any external support material, like silica or $MgCl_2$, but the catalyst is self-supported.

The Ziegler-Natta catalyst (ZN-C) can be further defined by the way it is obtained.

Accordingly, the Ziegler-Natta catalyst (ZN-C) is preferably obtained by a process comprising the steps of

a)

$a_1$) providing a solution of at least a Group 2 metal alkoxy compound (Ax) being the reaction product of a Group 2 metal compound and a monohydric alcohol (A) comprising in addition to the hydroxyl moiety at least one ether moiety optionally in an organic liquid reaction medium; or

$a_2$) a solution of at least a Group 2 metal alkoxy compound (Ax') being the reaction product of a Group 2 metal compound and an alcohol mixture of the monohydric alcohol (A) and a monohydric alcohol (B) of formula ROH, optionally in an organic liquid reaction medium; or

$a_3$) providing a solution of a mixture of the Group 2 alkoxy compound (Ax) and a Group 2 metal alkoxy compound (Bx) being the reaction product of a Group 2 metal compound and the monohydric alcohol (B), optionally in an organic liquid reaction medium; or

a$_4$) providing a solution of Group 2 alkoxide of formula M(OR$_1$)$_n$(OR$_2$)$_m$X$_{2-n-m}$ or mixture of Group 2 alkoxides M(OR$_1$)$_{n'}$X$_{2-n'}$ and M(OR$_2$)$_{m'}$X$_{2-m'}$, where M is Group 2 metal, X is halogen, R$_1$ and R$_2$ are different alkyl groups of C$_2$ to C$_{16}$ carbon atoms, and $0 \leq n < 2$, $0 \leq m < 2$ and n+m+(2-n-m) = 2, provided that both n and m $\neq$ 0, $0 < n' \leq 2$ and $0 < m' \leq 2$; and

b) adding said solution from step a) to at least one compound of a transition metal of Group 4 to 6 and
c) obtaining the solid catalyst component particles,
and adding an internal electron donor, preferably a non-phthalic internal donor, at any step prior to step c).

The internal donor or precursor thereof is added preferably to the solution of step a).

According to the procedure above the Ziegler-Natta catalyst can be obtained via precipitation method or via emulsion (liquid/liquid two-phase system) - solidification method depending on the physical conditions, especially temperature used in steps b) and c).

In both methods (precipitation or emulsion-solidification) the catalyst chemistry is the same.

In precipitation method combination of the solution of step a) with at least one transition metal compound in step b) is carried out and the whole reaction mixture is kept at least at 50°C, more preferably in the temperature range of 55°C to 110°C, more preferably in the range of 70°C to 100°C, to secure full precipitation of the catalyst component in form of a solid particles (step c).

In emulsion - solidification method in step b) the solution of step a) is typically added to the at least one transition metal compound at a lower temperature, such as from -10 to below 50°C, preferably from -5 to 30°C. During agitation of the emulsion the temperature is typically kept at -10 to below 40°C, preferably from -5 to 30°C. Droplets of the dispersed phase of the emulsion form the active catalyst composition. Solidification (step c) of the droplets is suitably carried out by heating the emulsion to a temperature of 70 to 150°C, preferably to 80 to 110°C.

The catalyst prepared by emulsion - solidification method is preferably used in the present invention.

In a preferred embodiment in step a) the solution of a$_2$) or a$_3$) are used, i.e. a solution of (Ax') or a solution of a mixture of (Ax) and (Bx).

Preferably the Group 2 metal is magnesium.

The magnesium alkoxy compounds (Ax), (Ax') and (Bx) can be prepared *in situ in* the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are monoethers of dihydric alcohols (glycol monoethers). Preferred alcohols (A) are C$_2$ to C$_4$ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

Illustrative monohydric alcohols (B) are of formula ROH, with R being straight-chain or branched C$_6$-C$_{10}$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 8:1 to 2:1, more preferably 5:1 to 3:1.

Magnesium alkoxy compound may be a reaction product of alcohol(s), as defined above, and a magnesium compound selected from dialkyl magnesiums, alkyl magnesium alkoxides, magnesium dialkoxides, alkoxy magnesium halides and alkyl magnesium halides. Alkyl groups can be a similar or different C$_1$-C$_{20}$ alkyl, preferably C$_2$-C$_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably the dialkyl magnesiums are used. Most preferred dialkyl magnesiums are butyl octyl magnesium or butyl ethyl magnesium.

It is also possible that magnesium compound can react in addition to the alcohol (A) and alcohol (B) also with a polyhydric alcohol (C) of formula R"(OH)$_m$ to obtain said magnesium alkoxide compounds. Preferred polyhydric alcohols, if used, are alcohols, wherein R" is a straight-chain, cyclic or branched C$_2$ to C$_{10}$ hydrocarbon residue, and m is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylol, pentane, hexane, heptane, octane and nonane. Hexanes and pentanes are particular preferred.

Mg compound is typically provided as a 10 to 50 wt.-% solution in a solvent as indicated above. Typical commercially available Mg compound, especially dialkyl magnesium solutions are 20 - 40 wt.-% solutions in toluene or heptanes.

The reaction for the preparation of the magnesium alkoxy compound may be carried out at a temperature of 40° to 70°C. Most suitable temperature is selected depending on the Mg compound and alcohol(s) used.

The transition metal compound of Group 4 to 6 is preferably a titanium compound, most preferably a titanium halide, like $TiCl_4$.

The non-phthalic internal donor used in the preparation of the catalyst used in the present invention is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from $\alpha$-olefin polymers of $\alpha$-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with an aromatic and/or aliphatic hydrocarbons, preferably with toluene, heptane or pentane. The catalyst can further be dried, as by evaporation or flushing with nitrogen, or it can be slurried to an oily liquid without any drying step.

The finally obtained Ziegler-Natta catalyst is desirably in the form of particles having generally an average particle size range of 5 to 200 $\mu$m, preferably 10 to 100. Particles are compact with low porosity and have surface area below 20 $g/m^2$, more preferably below 10 $g/m^2$. Typically the amount of Ti is 1 to 6 wt.-%, Mg 10 to 20 wt.-% and internal donor 10 to 40 wt.-% of the catalyst composition.

Detailed description of preparation of catalysts is disclosed in WO 2012/007430, EP 2610271, EP 261027 and EP 2610272.

The Ziegler-Natta catalyst is preferably used in association with an alkyl aluminum cocatalyst and optionally external donors.

As further component in the instant polymerization process an external donor is preferably present. Suitable external donors include certain silanes, ethers, esters, amines, ketones, heterocyclic compounds and blends of these. It is especially preferred to use a silane. It is most preferred to use silanes of the general formula

$$R^a{}_pR^b{}_qSi(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$^2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^1$ and $R^2$ are the same, yet more preferably both $R^3$ and $R^4$ are an ethyl group.

Especially preferred external donors are the dicyclopentyl dimethoxy silane donor (D-donor) or the cyclohexylmethyl dimethoxy silane donor (C-Donor).

In addition to the Ziegler-Natta catalyst and the optional external donor a co-catalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst is a trialkylaluminium, like triethylaluminium (TEAL), dialkyl aluminium chloride or alkyl aluminium dichloride or mixtures thereof. In one specific embodiment the co-catalyst is triethylaluminium (TEAL).

Preferably the ratio between the co-catalyst (Co) and the external donor (ED) [Co/ED] and/or the ratio between the co-catalyst (Co) and the transition metal (TM) [Co/TM] should be carefully chosen.

Accordingly,

(a) the mol-ratio of co-catalyst (Co) to external donor (ED) [Co/ED] is preferably in the range of 2 to 45, more preferably is in the range of 3 to 35, still more preferably is in the range of 5 to 25; and optionally

(b) the mol-ratio of co-catalyst (Co) to titanium compound (TC) [Co/TC] is preferably in the range of above 80 to 500, more preferably is in the range of 100 to 350, still more preferably is in the range of 120 to 300.

In a final process step the propylene-ethylene random copolymer is compounded optionally with the addition of additives to form the polypropylene composition.

No organic peroxide is introduced to the compounding step, so that no vis-breaking takes place.

As compounder usual extruders as known in the art can be used. No specific requirements or precautions need to be taken for the compounding conditions.

It is preferred that all aspects and embodiments of the polypropylene composition also apply to the process of said second aspect.

Article

In a further aspect the present invention relates to an article comprising the polypropylene composition as described above or below.The article can be a fiber, an injection molded article or extrusion coating material.

The article preferably comprises the polypropylene composition in an amount of from 50 to 100 wt.-%, more preferably from 70 to 100 wt.-%, still more preferably from 75 to 100 wt.-%, based on the total weight of the article.

In a specific embodiment, the article preferably comprises the polypropylene composition in an amount of from 80 to 100 wt.-%, more preferably from 90 to 100 wt.-%, still more preferably from 95 to 100 wt.-%, based on the total weight of the article.

If components other than the inventive polypropylene composition are present in the article, then it is preferred that these further components are additives or more polymers like low density polyethylene (LDPE).

The skilled practitioner would be able to select suitable additives that are well known in the art.

The additives are preferably selected from pigments, colorants, antioxidants, UV-stabilizers, nucleating agents, mold release agents, acid scavengers, lubricants, antistatic agents, and mixtures thereof.

It is understood that the content of additives includes any carrier polymers used to introduce the additives to the finished articles, i.e. masterbatch carrier polymers. An example of such a carrier polymer would be a polyethylene or polypropylene in the additives, pigment or colour masterbatches.

If present, it is preferred that the total content of additives and/or masterbatches is in the range from 1 to 10 wt.-%.

In one embodiment the article is a fiber.

The fiber can be a single-component fiber or a multi-component fiber, preferably a single-component fiber.

The fiber is preferably a fiber for carpets, a fiber for bulk continuous filament (BCF), a fiber for continuous filament (CF), a staple fiber, a fiber for partially oriented yearn (POY), a fiber for fully drawn yearn (FDY), a spundbond non-woven fiber.

The fiber can be produced by spinning or any other suitable method for producing fibers from polypropylene compositions. No specific requirements or precautions need to be taken for the moulding or spinning conditions.

Upon melt spinning, BCF fibers with a number of filaments in the range of 50 to 500, preferably from 80 to 450, still more preferably from 120 to 360 can be produced.

The BCF fiber dTex is preferably in the range of from 500 to 3000 dTex, more preferably from 800 to 2500 dTex, still more preferably from 1000 to 2250 dTex.

The ratio of denier to filament number for BCF is preferably in the range of from 2 to 20 DPF, preferably 3 to 18 DPF, still more preferably 4 to 15 DPF.

The BCF fiber preferably shows an improved balance of properties in regard of fiber strength, fiber tenacity, fiber elongation and fiber breaking load..

The fiber preferably has a fiber strength of from 35.0 to 50.0 N, preferably from 38.0 to 47.5 N, more preferably from 39.0 to 45.0 N, determined on 5.7 DPF and 1800 dTex bulk continuous filament (BCF) yarn.

Further, the fiber preferably has a fiber tenacity of from 1.50 to 3.50 cN/dTex, preferably from 2.00 to 3.00 cN/dTex, more preferably from 2.10 to 2.90 cN/dTex, determined on 5.7 DPF and 1800 dTex bulk continuous filament (BCF)yarn.

Still further, the fiber preferably has a fiber elongation of from 20.0 to 120.0 %, preferably from 25.0 to 100.0 %, more preferably from 30.0 to 80.0 %, determined on 5.7 DPF and 1800 dTex bulk continuous filament (BCF) yarn.

Additionally, the inventive polypropylene composition preferably shows an improved colour retention (lower yellowing) and better melt flow rate retention in a multipass extrusion.

Measuring the Yellowness Index (YI) on pellets after multipass extrusion (which are collected after the 1st and 3rd extrusion pass) determines the colour stability (to avoid discolouration or yellowing after multiple use in finished articles). The present invention polypropylene has a significantly improved colour retention (non-yellowing) compared to the comparative example.

It is preferred that the inventive polypropylene composition has a colour retention (% of YI increase) of not more than 250%, preferably not more than 240%, more preferably not more than 225% in a multipass extrusion after the third pass.

The lower limit is usually at least 25%, such as at least 50%.

Furthermore measuring the MFR of pellets again after multipass extrusion (which are collected after the 1st and 3rd extrusion pass) determines the processing stability (to avoid degradation after multiple use in finished articles) and the inventive polypropylene composition has similar (and not significantly decreased) processing stability compared to the comparative example.

It is preferred that all aspects and embodiments of the polypropylene composition and the process for producing the polypropylene composition also apply to the fiber of said third aspect.

Use

In another aspect the present invention relates to the polypropylene composition as described above or below for the production of fiber articles or fabrics, injection molded articles and/or extrusion coating material.

The fiber articles or fabrics can be carpet fibers, spunbond nonwovens, such as masks, carpets, artificial grass, stitching threads.

The injection molded articles can be thin wall packaging elements or house hold items preferably thin-walled injection molded articles where high stiffness is required, hence the present invention is directed to an injection molded article, such as cups, boxes, trays, pails, buckets, bowls, lids, flaps, caps etc..

The extrusion coating material can be extrusion coated woven or non-woven fabrics, where a woven or nonwoven fabric is used as substrate and the present inventive polypropylene composition can be used as coating material by extrusion coating process.

It is preferred that all aspects and embodiments of the polypropylene composition, the process for producing the polypropylene composition and the fiber also apply to the use of said fourth aspect.

**Examples**

The following definitions of terms and determination methods apply for the above general description of the invention as well as to the below examples unless otherwise defined.

**1. Measurement methods**

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene was determined at a temperature of 230 °C and a load of 2.16 kg.

**The xylene soluble fraction at room temperature (XCS, wt.-%)**

The amount of the polymer soluble in xylene was determined at 25 °C according to ISO 16152; 5th edition; 2005-07-01.

**DSC analysis, melting temperature ($T_m$) and crystallization temperature ($T_c$):** measured with a TA Instrument Q200 differential scanning calorimetry (DSC) on 5 to 7 mg samples. DSC was run according to ISO 11357 / part 3 /method C2 in a heat / cool / heat cycle with a scan rate of 10 °C/min in the temperature range of 0 to +225°C. Crystallization temperature ($T_c$) and crystallization enthalpy ($H_c$) were determined from the cooling step, while melting temperature ($T_m$) and melting enthalpy ($H_m$) were determined from the second heating step.

**Flexural Modulus**

The Flexural properties were determined according to ISO 178 method A (3-point bending test) on 80 mm $\times$ 10 mm $\times$ 4 mm specimens. Following the standard, a test speed of 2 mm/min and a span length of 16 times the thickness was used. The testing temperature was 23$\pm$2 ° C. Injection molding was carried out according to ISO 19069-2 using a melt temperature of 230 °C for all materials irrespective of material melt flow rate.

**Tensile Modulus**

The tensile properties were determined on injection moulded dogbone specimens prepared in accordance with ISO 527-2 using a melt temperature of 230 °C. Tensile modulus was determined according to ISO 527-1,-2 at 1 mm/min and 23°C. To determine stress at yield and strain at yield, a speed of 50 mm/min was used.

**Notched impact strength (NIS)**

The Charpy notched impact strength (NIS) was measured according to ISO 179 1eA at +23°C, using injection moulded bar test specimens of $80 \times 10 \times 4$ mm$^3$ prepared in accordance with ISO 19069-2 using a melt temperature of 230 °C for all materials irrespective of material melt flow rate.

**Number average molecular weight ($M_n$), weight average molecular weight ($M_w$), z-average molecular weight (Mz) and molecular weight distribution (MWD)**

Molecular weight averages (Mw, Mn, Mz), and the molecular weight distribution (MWD), i.e. the Mw/Mn (wherein Mn is the number average molecular weight, Mw is the weight average molecular weight), the Mz/Mw (wherein Mz is the z-average molecular weight, Mw is the weight average molecular weight) were determined by Gel Permeation Chromatography (GPC) according to ISO 16014-4:2003 and ASTM D 6474-99. A PolymerChar GPC instrument, equipped with infrared (IR) detector was used with 3 $\times$ Olexis and Ix Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 $\mu$l of sample solution were injected per analysis. The column set was calibrated using universal calibration (according to ISO 16014-2:2003) with at least 15 narrow MWD polystyrene (PS) standards in the range from 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument.

**Dynamic Rheology**

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates using nitrogen atmosphere and setting a strain within the linear viscoelastic regime. The oscillatory shear tests could be done at 200°C or other temperature at which the material is molten, applying a frequency range between 0.05 and 500 rad/s and setting a gap of 1.2 mm.

In a dynamic shear experiment the probe was subjected to a homogeneous deformation at a sinusoidal varying shear strain or shear stress (strain and stress-controlled mode, respectively). On a controlled strain experiment, the probe was subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, $\eta^*$, the dynamic shear viscosity, $\eta'$, the out-of-phase component of the complex shear viscosity, $\eta"$ and the loss tangent, tan $\eta$, which can be expressed as follows:

$$G' = \frac{\sigma_0}{\gamma_0} \cos\delta \ [Pa] \tag{3}$$

$$G" = \frac{\sigma_0}{\gamma_0} \sin\delta \ [Pa] \tag{4}$$

$$G^* = G' + iG" \ [Pa] \tag{5}$$

$$\eta^* = \eta' - i\eta" \ [Pa \cdot s] \tag{6}$$

$$\eta' = \frac{G''}{\omega} \ [Pa \cdot s] \tag{7}$$

$$\eta" = \frac{G'}{\omega} \ [Pa \cdot s] \tag{8}$$

The determination of so-called Shear Thinning Index, which correlates with MWD and is independent of Mw, is done as described in equation 9.

$$SHI_{(x/y)} = \frac{\text{Eta* for } (G^* = x \text{ kPa})}{\text{Eta* for } (G^* = y \text{ kPa})} \tag{9}$$

For example, the $SHI_{(2.7/210)}$ is defined by the value of the complex viscosity, in Pa s, determined for a value of G* equal to 2.7 kPa, divided by the value of the complex viscosity, in Pa s, determined for a value of G* equal to 210 kPa.

The values of storage modulus (G'), loss modulus (G"), complex modulus (G*) and complex viscosity ($\eta^*$) were obtained as a function of frequency ($\omega$).

Thereby, e.g. $\eta^*_{300rad/s}$ (eta*$_{300rad/s}$) is used as abbreviation for the complex viscosity at the frequency of 300 rad/s and $\eta^*_{0.05rad/s}$ (eta*$_{0.05rad/s}$) is used as abbreviation for the complex viscosity at the frequency of 0.05 rad/s, and $\eta^*_{0rad/s}$ (eta*$_{0rad/s}$) is used as abbreviation for the complex viscosity at the frequency of 0 rad/s or zero shear viscosity. The loss tangent tan (delta) is defined as the ratio of the loss modulus (G") and the storage modulus (G') at a given frequency. Thereby, e.g. tan$_{0.05}$ is used as abbreviation for the ratio of the loss modulus (G") and the storage modulus (G') at 0.05 rad/s and tan$_{300}$ is used as abbreviation for the ratio of the loss modulus (G") and the storage modulus (G') at 300 rad/s.

The elasticity balance tan$_{0.05}$/tan$_{300}$ is defined as the ratio of the loss tangent tan$_{0.05}$ and the loss tangent tan$_{300}$.

Besides the above-mentioned rheological functions one can also determine other rheological parameters such as the so-called elasticity index EI(x). The elasticity index Ei(x) is the value of the storage modulus, G' determined for a value of the loss modulus, G" of x kPa and can be described by equation 10.

$$EI(x) = G' \ for \ (G'' = x \ kPa) \ [Pa] \tag{10}$$

For example, the EI(5kPa) is the defined by the value of the storage modulus G', determined for a value of G" equal to 5 kPa.

The polydispersity index, PDI, is defined by equation 11.

$$PDI = \frac{10^5}{G'(w_{COP})}, \qquad w_{COP} = w \ for \ (G' = G") \tag{11}$$

where $w_{COP}$ is the cross-over angular frequency, determined as the angular frequency for which the storage modulus, G'($w_{cop}$) in Pa, equals the loss modulus, G".

The values were determined by means of a single point interpolation procedure, as defined by Rheocompass software (Anton Paar rheometer software). In situations for which a given G'($w_{cop}$) value is not experimentally reached, the value was determined by means of an extrapolation, using the same procedure as before. In both cases (interpolation or extrapolation), the option from Rheocompass *"Interpolate y-values to x-values from parameter"* and the *"logarithmic*

*interpolation type"* were applied.

**Comonomer content in polypropylene**

The comonomer content was determined by quantitative Fourier transform infrared spectroscopy (FTIR) after basic assignment calibrated via quantitative $^{13}$C nuclear magnetic resonance (NMR) spectroscopy in a manner well known in the art. Thin films were pressed to a thickness of 250 $\mu$m and spectra recorded in transmission mode. Specifically, the ethylene content of a polypropylene-co-ethylene copolymer was determined using the baseline corrected peak area of the quantitative bands found at 720-722 and 730-733 cm[-1]. Propylene-1-butene-copolymers were evaluated at 767 cm[-1]. Quantitative results were obtained based upon reference to the film thickness.

**Calculation** of comonomer content of the second propylene fraction (B):

$$\frac{C2\ (PP) - w(PP1) \times C2(PP1)}{w(PP2)} = C2(PP2)$$

wherein

w(PP1) is the weight fraction [split wt.-%] of the first propylene fraction (A),
w(PP2) is the weight fraction [split wt.-%] of second propylene fraction (B),

C2(PP1)  is the comonomer content [in wt.-%] of the first propylene fraction (A),
C2(PP)   is the comonomer content [in wt.-%] of the monophasic propylene polymer (PP),
C2(PP2)  is the calculated comonomer content [in wt.-%] of the second propylene fraction (B).

**Calculation** of the XS content of the second propylene fraction (B):

$$\frac{XS\ (PP) - w(PP1) \times XS\ (PP1)}{w(PP2)} = XS(PP2)$$

wherein

w(PP1) is the weight fraction [split wt.-%] of the first propylene fraction (A),
w(PP2) is the weight fraction [split wt.-%] of second propylene fraction (B),

XS(PP1)  is the xylene soluble (XS) content [in wt.-%] of the first propylene fraction (A),
XS(PP)   is the xylene soluble (XS) content [in wt.-%] of the monophasic propylene polymer (PP),
XS(PP2)  is the calculated xylene soluble (XS) content [in wt.-%] of the second propylene fraction (B).

**Calculation** of the $MFR_2$ of the second propylene fraction (B):

$$10^{\frac{\log(MFR_2\ (PP)) - w(PP1) \times \log(MFR_2(PP1))}{w(PP2)}} = MFR_2(PP2)$$

w(PP1) is the weight fraction [split wt.-%] of the first propylene fraction (A),
w(PP2) is the weight fraction [split wt.-%] of second propylene fraction (B),

$MFR_2$(PP1)   is the $MFR_2$ [in g/10 min] of the first propylene fraction (A),
$MFR_2$(PP)    is the $MFR_2$ [in g/10 min] of the monophasic propylene polymer (PP),
$MFR_2$(PP2)   is the calculated $MFR_2$ [in g/10 min] of the second propylene fraction (B).

**Fiber Dtex**

Decitex (dtex) is mainly used for continuous filament yarn, defined as the mass in gram per 10,000 m length. Weight (in gram) of 10 meters BCF yarns (bunch of 285 filaments) were measured and then Dtex was calculated by multiplying by 1000.
Fiber denier was calculated as the mass in gram per 9,000 m length.

$$Denier = Dtex \times 0.9$$

**Fiber tensile properties (Tensile Strength, Elongation at Break)**

Tensile properties of fibers were determined at 23°C according to ISO 527 with a bunch of BCF fibers using 1800 dTex (285 filaments). Tensile properties (Tensile stress at break or Elongation at break) of fibers were determined with 50 mm gauge length and 500 mm/min test speed.

Fiber Breaking Load or Tensile Stress at Break is reported in N or Kgf.

Fiber tenacity was calculated as strength divided by Dtex or denier, most used terms are cN/dTex and GPD (gram per denier) = kgf $\times$ 1000 / denier

**Yellowness index**

The yellowness index was measured according to ASTM E313

**Multipass Extrusion**

Multiple pass extrusion was done on Dr. Collins twin screw extruder (25mm dia and LID 32:1) using the following settings:

- Temperature profile: 260 - 260 - 260 - 260 - 260 °C
- 3 extrusion passes in open air

After each extrusion pass, the strands were caught up and pelletised. Pellets were collected after the 1st and 3rd extrusion pass for further measurements of MFR and YI.

**2. Polypropylene compositions**

Polymerization catalyst

The catalyst used in the polymerization process for propylene-ethylene random copolymer was the phthalate-free Ziegler-Natta type catalyst used in the inventive examples of WO2015/117948 A1, with triethyl-aluminium (TEAL) as co-catalyst and dicyclopentyl dimethoxy silane (donor "D") as donor.

Polymerization of the propylene polymers

The propylene polymers of examples IE1 and IE2 were polymerized in a Borstar® plant comprising a pre-polymerization loop reactor, a loop reactor and a gas phase reactor, whereby the slurry from the prepolymerization reactor was withdrawn intermittently and directed into the loop reactor. Finally, the polymer was directed to the gas phase reactor (GPR). The polymerization conditions are listed in Table 1 below.

Table 1: Polymerization conditions of the propylene polymers of examples IE1 and IE2

|  |  | IE1 | IE2 |
|---|---|---|---|
| **Pre-polymerizer** | | | |
| Temperature | °C | 25 | 25 |
| Pressure | barg | 66 | 66 |
| Donor / C3 | g/ton | 9 | 9 |
| TEAL / C3 | g/ton | 120 | 120 |
| TEAL / Ti | mol/mol | 100 | 100 |
| **Loop reactor** | | | |
| Temperature | °C | 75 | 75 |
| Pressure | barg | 55 | 55 |

(continued)

| Loop reactor | | | |
|---|---|---|---|
| H2/C3 feed ratio | mol/kmol | 4.7 | 4.8 |
| C2/C3 feed ratio | mol/kmol | 0 | 0.15 |
| Split (Pre-pol. + Loop) | wt.-% | 44 | 47 |
| $MFR_2$ | g/10 min | 24.5 | 25.0 |
| C2 content | wt.-% | 0 | 0.1 |
| XCS | wt.-% | 4.2 | 3.9 |
| Gas phase reactor | | | |
| Temperature | °C | 85 | 85 |
| Pressure | barg | 22 | 22 |
| H2/C3 feed ratio | mol/kmol | 27.5 | 30.6 |
| C2/C3 feed ratio | mol/kmol | 0.9 | 1.4 |
| Split (GPR) | wt.-% | 56 | 53 |

The polymer powders from the gas phase reactor were compounded with 0.2 wt.-% of an additive package of Irgafos 168, Chimassorb 2020, Irgastab FS 042 (all commercially available from BASF SE) and calcium stearate and pelletized in a W&P ZSK 70 twinscrew extruder (Coperion) to obtain the polypropylene compositions of inventive examples IE1 and IE2.

This first extrusion steps to obtain the inventive compositions (without any peroxides added during extrusion) is referred to as the pass zero pellets

The properties of the first propylene polymer (A) polymerized in the loop reactor, the second propylene polymer (B) polymerized in the gas phase reactor and the polypropylene composition for examples IE1 and IE2 are listed in Table 2 below. The properties of the second propylene polymer (B) are calculated from the accordant measured properties of the first propylene polymer (A) and the compounded polypropylene composition (PP).

Table 2: Properties of examples IE1 and IE2

| | | IE1 | IE2 |
|---|---|---|---|
| First propylene polymer (A) | | | |
| $MFR_2$ | g/10 min | 24.5 | 25.0 |
| C2 content | wt.-% | 0 | 0.1 |
| XCS | wt.-% | 4.2 | 3.9 |
| Split | wt.-% | 44 | 47 |
| Second propylene polymer (B) | | | |
| $MFR_2$ | g/10 min | 24.4 | 25.0 |
| C2 content | wt.-% | 0.27 | 0.57 |
| XCS | wt.-% | 2.1 | 2.6 |
| Split | wt.-% | 56 | 53 |
| Compounded polypropylene composition (PP) | | | |
| $MFR_2$ | g/10 min | 24.4 | 25.1 |
| C2 content | wt.-% | 0.15 | 0.35 |
| XCS | wt.-% | 3.0 | 3.2 |

As comparative example CE1 a market reference grade from TASNEE (PP H2245) produced by Novolen Technology was used.

The properties of the compounded polypropylene compositions of examples IE1, IE2 and CE1 are shown in Table 3 below:

Table 3: Properties of examples IE1, IE2 and CE1

|  |  | IE1 | IE2 | CE1 |
|---|---|---|---|---|
| $MFR_2$ | g/10 min | 24.4 | 25.1 | 24.2 |
| C2 content | wt.-% | 0.15 | 0.35 | 0 |
| XCS | wt.-% | 3.0 | 3.2 | 3.7 |
| Tm | °C | 160.2 | 159.1 | 158.6 |
| ΔHm | J/g | 114.3 | 114.7 | 108.3 |
| Tc | °C | 116.4 | 114.2 | 112.5 |
| ΔHc | J/g | 108.8 | 107.7 | 103.1 |
| Mn | g/mol | 24350 | 23600 | 28200 |
| Mw | g/mol | 209500 | 210000 | 203800 |
| Mw/Mn | - | 8.6 | 8.9 | 7.2 |
| Mz | g/mol | 669400 | 691550 | 659600 |
| Mz/Mw | - | 3.2 | 3.3 | 3.2 |
| $Eta_{0.05}$ | Pa·s | 1150 | 1143 | 1140 |
| $Eta_{300}$ | Pa·s | 152 | 155 | 159 |
| $SHI_{2.7/210}$ | - | 27.4 | 25.3 | 21.5 |
| Tensile modulus | MPa | 1505 | 1430 | 1340 |
| Tensile stress at yield | MPa | 34.3 | 33.0 | 31.8 |
| Tensile strain at yield | % | 9.3 | 9.5 | 10.4 |
| Flexural modulus | MPa | 1510 | 1450 | 1350 |
| Charpy NIS, 23°C | $kJ/m^2$ | 2.2 | 2.2 | 2.4 |

The inventive examples IE1 and IE2 show a broader molecular weight distribution in the Mw/Mn and shear thinning index and have a higher stiffness in tensile properties and flexural modulus at comparable impact properties.

The polypropylene compositions of examples IE1 and CE1 were used for producing fibers in a Oerlikon Neumag BCF line. The spinning conditions and fiber properties are listed in Table 4 below:

Comparative evaluation done with 5.7 DPF (denier per filament) and 1800 dTex BCF yarn, the final properties of fiber in terms of tenacity (fiber strength) and elongation of break are superior when compared to CE1.

In addition to that, fibers from bimodal design of inventive example showed good soft feeling and crimp properties while maintaining the high strength of the fibers.

Table 4: Spinning conditions and BCF fiber properties of examples IE1 and CE1

| Fiber production | unit | IE1 | CE1 |
|---|---|---|---|
| Fiber dtex | | 1800 | 1800 |
| No. of filaments | pcs. | 285 | 285 |
| Spinning pump speed | m/min | 21 | 20.7 |
| fiber plant output/production rate | kgs/hr | 325.5 | 320 |
| Extruder zone temperature | °C | | |
| extruder zone 1 | °C | 225 | 225 |
| extruder zone 2 | °C | 227 | 227 |
| extruder zone 3 | °C | 228 | 228 |
| extruder zone 4 | °C | 230 | 230 |
| extruder zone 5 | °C | 231 | 231 |
| extruder zone 6 | °C | 233 | 233 |
| extruder zone 7 | °C | 235 | 235 |
| extruder zone 8 | °C | 235 | 235 |
| extruder zone 9 | °C | 235 | 235 |
| Temperature of spinning beam | °C | 235 | 235 |
| Melt pressure | bar | 125 | 125 |
| Quench air temperature | °C | 17 | 17 |
| Quench air velocity | m/sec. | 0.6 | 0.6 |
| temperature duo 1 - Godet 2 | °C | 80 | 80 |
| temperature duo 2 - Godet 3,4 | °C | 130 | 130 |
| speed of inlet godet - Godet 1 | m/min | 760 | 760 |
| speed duo 1 - Godet 1 | m/min | 760 | 760 |
| Draw Ratio-1 | - | 1.02 | 1.02 |
| speed duo 2 - Godet 2 | m/min | 780 | 780 |
| Draw Ratio-2 | - | 2.73 | 2.73 |
| Main draw-off godet speed - Godet 3,4 | m/min | 2130 | 2130 |
| speed of draw-off godet 1 - Godet 5 | m/min | 1820 | 1820 |
| speed of draw-off godet 2 -Godet 6 | m/min | 1850 | 1850 |
| Spin finish oil | rpm | 14 | 15 |
| speed of winder (line speed) | m/min | 1850 | 1850 |
| | | | |
| Fiber Test results | | | |
| Fiber dtex | | 1800 | 1800 |
| Fiber denier | | 1620 | 1620 |
| Breaking load (Fiber strength) | N | 41.6 | 37.6 |
| Fiber Tenacity | cN/dTex | 2.31 | 2.09 |
| Fiber Tenacity | gpd | 2.62 | 2.36 |
| Fiber Elongation % | % | 36.4 | 36.1 |
| Fiber Breaking load | Kgf | 4.24 | 3.83 |

The polypropylene compositions of examples IE1 and CE1 were also subjected to a multipass extrusion for evaluating the melt flow rate retention and the colour retention. Thereby, after each pass the melt flow rate and the colour (YI) of the inventive polypropylene composition were measured and listed in Table 5 for the colour retention (YI) and in Table 6 for the melt flow rate retention.

Measuring the Yellowness Index (YI) on pellets after multipass extrusion (which are collected after the 1st and 3rd

extrusion pass) determines the colour stability (to avoid discolouration or yellowing after multiple use in the finished articles).

Table 5:

|       | YI after pass 0 | YI after pass 3 | YI Increase (%) after pass 3 compared to pass 0 |
|-------|-----------------|-----------------|--------------------------------------------------|
| CE1   | -2.38           | 3.63            | 252.5                                            |
| IE1   | -3.15           | -0.48           | 84.8                                             |

From the data, it is clear that polypropylene composition according to the present invention has a significantly improved colour retention (non-yellowing) compared to the comparative example.

The inventive polypropylene composition has a colour retention (% of YI increase) of not more than 250%, preferably not more than 240%, more preferably not more than 225% in a multipass extrusion after the third pass.

Furthermore the processing stability is determined by measuring the $MFR_2$ of pellets again after multipass extrusion (which are collected after the 1st and 3rd extrusion pass). A low increase of $MFR_2$ of pellets after multipass extrusion thereby shows a low degradation after multiple use in finished articles.

Table 6:

|       | $MFR_2$ after pass 0 (g/10min) | $MFR_2$ after pass 3 (g/10min) | $MFR_2$ Increase (%) after pass 3 compared to pass 0 |
|-------|-------------------------------|-------------------------------|------------------------------------------------------|
| CE1   | 24.2                          | 39.0                          | 61.2%                                                |
| IE1   | 24.4                          | 38.0                          | 55.7%                                                |

From the data, it is clear that $MFR_2$ is somewhat more stable after 3 passes for the inventive examples and it has similar (and not significantly decreased) processing stability compared to the comparative example.

The inventive polypropylene provides very good processing stabilisation (MFR retention) and very low discolouration (lower yellowing), which is better than the performance obtained by the comparative example.

This will reflect also for fiber colour for carpets produced with inventive examples, as inventive example is significantly better than the comparative examples in terms of multiple use and long-term colour retention.

**Claims**

1. A polypropylene composition comprising

    (A) a first propylene polymer being a propylene homopolymer or random copolymer of propylene with comonomers selected from ethylene and alpha-olefins having from 4 to 8 carbon atoms, which has a total comonomer content of from 0 to 0.20 wt.-%, preferably 0 to 0.15 wt.-%, more preferably from 0 to 0.10 wt.-%, based on the total weight of the first propylene polymer (A), determined by quantitative FTIR spectroscopy, calibrated by quantitative $^{13}$C-NMR spectroscopy;
    (B) a second propylene polymer being a random copolymer of propylene with comonomers selected from ethylene and alpha-olefins having from 4 to 8 carbon atoms, which has a total comonomer content of from 0.15 to 1.25 wt.-%, preferably from 0.20 to 1.00 wt.-%, more preferably from 0.22 to 0.80 wt.-%, based on the total weight of the second propylene polymer (B), calculated or determined by quantitative FTIR spectroscopy, calibrated by quantitative $^{13}$C-NMR spectroscopy;

    wherein

    the comonomer content of the second propylene polymer (B) is higher than the comonomer content of the first propylene polymer (A);
    the total weight content of the first propylene polymer (A) and the second propylene polymer (B) is at least 95.0 wt.-%, such as from 95.0 to 100 wt.-%, preferably from 96.0 to 99.999 wt.-%, more preferably from 97.5 to 99.99 wt.-%, based on the total weight of the polypropylene composition, and
    the polypropylene composition has

- a total comonomer content of from 0.05 to 0.75 wt.-%, preferably from 0.07 to 0.60 wt.-% more preferably from 0.10 to 0.50 wt.-%, based on the total weight of the polypropylene composition, determined by quantitative FTIR spectroscopy, calibrated by quantitative $^{13}$C-NMR spectroscopy;
- a melt flow rate $MFR_2$ of from 15.0 to 40.0 g/10 min, preferably from 17.5 to 37.5 g/10 min, more preferably from 20.0 to 35.0 g/10 min, determined according to ISO 1133 at 230°C and 2.16 kg; and
- a ratio of weight average molecular weight to number average molecular weight Mw/Mn of from 7.0 to 14.0, preferably from 7.5 to 13.0, more preferably from 8.0 to 12.5, determined by GPC analysis according to ISO 16014-4:2003 and ASTM D 6474-99.

2. The polypropylene composition according to claim 1, wherein the polypropylene composition has one or more or all of the following properties:

- a weight average molecular weight Mw of from 175000 to 400000 g/mol, preferably from 185000 to 375000 g/mol, more preferably from 200000 to 350000 g/mol;
- a number average molecular weight Mn of from 19000 to 30000 g/mol, preferably from 20000 to 28000 g/mol, more preferably from 21000 to 26000 g/mol;
- a z average molecular weight Mz of from 550000 to 850000 g/mol, preferably from 575000 to 825000 g/mol, more preferably from 600000 to 800000 g/mol;
- a ratio of Mz/Mw of from 2.0 to 5.0, preferably from 2.2 to 4.5, more preferably from 2.5 to 4.0,

all determined by GPC analysis according to ISO 16014-4:2003 and ASTM D 6474-99.

3. The polypropylene composition according to claims 1 or 2, wherein the polypropylene composition has one or more or all of the following properties:

- a melting temperature Tm of from 152.5 to 165.0°C, preferably from 153.5 to 163.5°C, more from 155.0 to 162.5°C;
- a crystallization temperature Tc of from 110.0 to 123°C, preferably from 111.5 to 121.5°C, more preferably from 113.0 to 120°C;
- a melting enthalpy $\Delta$Hm of from 105.0 to 125.0 J/g, preferably from 107.0 to 122.5 J/g, more preferably from 109.0 to 120.0 J/g;
- a crystallization enthalpy $\Delta$Hc of from 100.0 to 120.0 J/g, preferably from 103.5 to 117.5 J/g, more preferably from 104.0 to 115.0 J/g,

all determined by DSC analysis according to ISO 11357 / part 3 / method C2 in a heat / cool / heat cycle with a scan rate of 10 °C/min in the temperature range of 0 to +225°C.

4. The polypropylene composition according to any one of the preceding claims, wherein the polypropylene composition has one or more or all of the following properties:

- a complex viscosity at a frequency of 0.05 rad/s $eta_{0.05}$ of from 750 to 1500 Pa·s, preferably from 900 to 1350 Pa·s, more preferably from 1000 to 1250 Pa·s, determined by dynamic shear measurements complying with ISO 6721-1 and ISO 6721-10;
- a complex viscosity at a frequency of 300 rad/s $eta_{0.05}$ of from 50 to 250 Pa·s, preferably from 75 to 225 Pa·s, more preferably from 100 to 200 Pa·s, determined by dynamic shear measurements complying with ISO 6721-1 and ISO 6721-10;
- a shear thinning index $SHI_{2.7/210}$ of from 20.0 to 35.0, preferably from 22.0 to 32.5, more preferably from 23.0 to 30.0, all determined by dynamic shear measurements complying with ISO 6721-1 and ISO 6721-10;
- a xylene cold solubles (XCS) fraction of from 0.5 to 5.0 wt.-%, preferably 1.0 to 4.5 wt.-%, more preferably from 1.5 to 4.0 wt.-%, determined according to ISO 16152;
- a tensile modulus of from 1350 to 1750 MPa, preferably from 1375 to 1700 MPa, more preferably from 1400 to 1650 MPa, determined according to ISO 527-2/1 A;
- a tensile stress at yield of from 30.0 to 40.0 MPa, preferably from 31.0 to 38.5 MPa, more preferably from 32.0 to 37.5 MPa, determined according to ISO 527-2/1 A;
- a tensile strain at yield of from 5.0 to 15.0 %, preferably from 6.0 to 13.5 %, more preferably from 7.0 to 12.5 %, determined according to ISO 527-2/1 A;
- a flexural modulus of from 1350 to 1750 MPa, preferably from 1375 to 1700 MPa, more preferably from 1400 to 1650 MPa, determined according to ISO 178;

• a Charpy notched impact strength at 23°C of from 1.0 to 7.5 kJ/m$^2$, preferably from 1.2 to 6.5 kJ/m$^2$, more preferably from 1.5 to 5.0 kJ/m$^2$, determined according to to ISO 179-1 eA at +23 °C.

5. The polypropylene composition according to any one of the preceding claims, wherein the weight ratio of the first propylene polymer (A) to the second propylene polymer (B) in the polypropylene composition is from 35 : 65 to 60 : 40, preferably from 37 : 63 to 55 : 45, more preferably from 40 : 60 to 50 : 50.

6. The polypropylene composition according to any one of the preceding claims, wherein the polypropylene composition comprises a multimodal propylene copolymer comprising the first propylene polymer (A) and the second propylene polymer (B) as polymer fractions, preferably produced in a multistage polymerization process.

7. The polypropylene composition according to any one of the preceding claims, wherein the first propylene polymer (A) has one or more or all of the following properties:

  • a melt flow rate MFR$_2$ of from 15.0 to 40.0 g/10 min, preferably from 17.5 to 37.5 g/10 min, more preferably from 20.0 to 35.0 g/10 min, determined according to ISO 1133 at 230°C and 2.16 kg;
  • a xylene cold solubles (XCS) fraction of from 1.5 to 7.5 wt.-%, preferably 2.5 to 6.5 wt.-%, more preferably from 3.0 to 5.5 wt.-%, determined according to ISO 16152.

8. The polypropylene composition according to any one of the preceding claims, wherein the second propylene polymer (B) has one or more or all of the following properties:

  • a melt flow rate MFR$_2$ of from 15.0 to 40.0 g/10 min, preferably from 17.5 to 37.5 g/10 min, more preferably from 20.0 to 35.0 g/10 min, calculated or determined according to ISO 1133 at 230°C and 2.16 kg;
  • a xylene cold solubles (XCS) fraction of from 0.5 to 4.0 wt.-%, preferably 1.0 to 3.5 wt.-%, more preferably from 1.7 to 3.0 wt.-%, calculated or determined according to ISO 16152.

9. A process for producing the polypropylene composition according to any one of the proceeding claims comprising the following steps:

  • Polymerizing propylene and optionally comonomers selected from ethylene and alpha-olefins having from 4 to 8 carbon atoms in the presence of a Ziegler-Natta catalyst system in a first polymerization stage to obtain a first polymerization mixture comprising the first propylene polymer (A) and the Ziegler-Natta catalyst system;
  • Transferring the first polymerization mixture from the first polymerization stage to a second polymerization stage;
  • Polymerizing propylene and comonomers selected from ethylene and alpha-olefins having from 4 to 8 carbon atoms in the presence of first polymerization mixture in the second polymerization stage to obtain a second polymerization mixture comprising the first propylene polymer (A), the second propylene polymer (B) and the Ziegler-Natta catalyst system;
  • Withdrawing the second polymerization mixture from the second polymerization stage;
  • Compounding the mixture comprising the first propylene polymer (A) and the second propylene polymer (B) without presence of an organic peroxide for vis-breaking to obtain the polypropylene composition.

10. The process according to claim 9, wherein the Ziegler-Natta catalyst system comprises

  a) a Ziegler-Natta catalyst (ZN-C) comprising compounds (TC) of a transition metal of Group 4 to 6 of IUPAC, a Group 2 metal compound (MC) and an internal donor (ID), wherein said internal donor (ID) is a non-phthalic compound, preferably a non-phthalic acid ester;
  b) a co-catalyst (Co); and
  c) optionally an external donor (ED),

wherein the molar ratio of co-catalyst (Co) to external donor (ED) [Co/ED] is preferably in the range of 2 to 45, and the molar ratio of co-catalyst (Co) to titanium compound (TC) [Co/TC] is preferably in the range of above 80 to 500.

11. An article comprising the polypropylene composition according to any one of the preceding claims, wherein the article is preferably selected from a fiber, an injection molded article or extrusion coating material.

12. The article according to claim 11 being a fiber, which has one or more or all of the following properties:

• a fiber strength of from 35.0 to 50.0 N, preferably from 38.0 to 47.5 N, more preferably from 39.0 to 45.0 N;
• a fiber tenacity of from 1.50 to 3.50 cN/dTex, preferably from 2.00 to 3.00 cN/dTex, more preferably from 2.10 to 2.90 cN/dTex;
• a fiber elongation of from 20.0 to 120.0 %, preferably from 25.0 to 100.0 %, more preferably from 30.0 to 80.0 %;

all determined on 5.7 DPF and 1800 dTex bulk continuous filament (BCF) yarn.

13. The article according to claims 11 or 12 being a fiber, which has a colour retention (% of YI increase) of not more than 250%, preferably not more than 240%, more preferably not more than 225%, in a multipass extrusion after the third pass.

14. The article according to any one of claims 11 to 13 being a fiber for carpets, a fiber for bulk continuous filament (BCF), a fiber for continuous filament (CF), a staple fiber, a fiber for partially oriented yearn (POY), a fiber for fully drawn yearn (FDY), a spundbond non-woven fiber.

15. Use of the polypropylene composition according to any one of claims 1 to 10 for the production of fiber articles or fabrics, preferably a carpet fibers, spunbond nonwovens, such as masks, carpets, artificial grass, stitching threads, for the production of injection molded articles, like thin wall packaging elements or house hold items, such as cups, boxes, trays, pails, buckets, bowls, lids, flaps, caps, and/or for the production of extrusion coating material, such as extrusion coated woven or non-woven fabrics.

Europäisches
Patentamt
European
Patent Office
Office européen
des brevets

**EUROPEAN SEARCH REPORT**

Application Number

EP 24 21 9720

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/301065 A1 (WANG JINGBO [AT] ET AL) 3 October 2019 (2019-10-03) * paragraph [0001] * * paragraph [0011] * * paragraph [0066] * * paragraph [0148] * | 1-15 | INV. C08F210/06 C08F110/06 C08L23/08 D01F6/00 C08F2/00 |
| A | US 7 655 582 B2 (SUNOCO CHEMICALS INC [US]) 2 February 2010 (2010-02-02) * paragraph [0005] * * paragraph [0032] * | 1-15 | |
| A | US 2010/160533 A1 (MUSGRAVE MIKE [US] ET AL) 24 June 2010 (2010-06-24) * see column 1, lines 5-10 * * column 3, lines 28-34 * * sample C, D; table 1 * | 1-15 | |

TECHNICAL FIELDS
SEARCHED (IPC)

C08F
C08L

The present search report has been drawn up for all claims

| Place of search | Date of completion of the search | Examiner |
|---|---|---|
| Munich | 5 May 2025 | Thomas, Dominik |

## ANNEX TO THE EUROPEAN SEARCH REPORT
## ON EUROPEAN PATENT APPLICATION NO.

EP 24 21 9720

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2025

| Patent document cited in search report | | Publication date | Patent family member(s) | | Publication date |
|---|---|---|---|---|---|
| US 2019301065 | A1 | 03-10-2019 | BR 112018012942 | A2 | 11-12-2018 |
| | | | CN 108474160 | A | 31-08-2018 |
| | | | DK 3400330 | T3 | 03-01-2022 |
| | | | EP 3400330 | A1 | 14-11-2018 |
| | | | ES 2900514 | T3 | 17-03-2022 |
| | | | KR 20180096730 | A | 29-08-2018 |
| | | | US 2019301065 | A1 | 03-10-2019 |
| | | | WO 2017118612 | A1 | 13-07-2017 |
| US 7655582 | B2 | 02-02-2010 | CA 2563984 | A1 | 01-12-2005 |
| | | | EP 1745101 | A1 | 24-01-2007 |
| | | | US 2005255777 | A1 | 17-11-2005 |
| | | | WO 2005113674 | A1 | 01-12-2005 |
| US 2010160533 | A1 | 24-06-2010 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010105980 A1
- WO 2013124219 A1
- EP 2682505 A1
- EP 0887379 A
- WO 9212182 A
- WO 2004000899 A
- WO 2004111095 A
- WO 9924478 A

- WO 9924479 A
- WO 0068315 A
- WO 2012007430 A
- EP 2610271 A
- EP 261027 A
- EP 2610272 A
- WO 2015117948 A1

**Non-patent literature cited in the description**

- **HANS ZWEIFEL**. Plastic Additives Handbook. 2009, 1141-1190